# EUROPEAN PATENT APPLICATION

(11) **EP 1 132 820 A2**
(43) Date of publication of application: **12.09.2001**
(21) Application number: 01100869.5
(22) Date of filing: 16.01.2001
(51) Int. Cl.: G06F 13/16, G06F 13/42

(54) **Collision detection for dual port RAM operations on a microcontroller**

(30) Priority: 04.02.2000 US 497794
(71) Applicant: Microchip Technology Incorporated, Chandler, AZ 85224-6199 (US)
(72) Inventor: Dippenaar, Theodor J., Chandler, Arizona 85248 (US); Duvenhage, Stephanus, Phoenix, Arizona 85044 (US); Pyska, Michael S., Phoenix, Arizona 85048 (US)
(74) Representative: Patry, Didier Marcel Pierre

(57) **Abstract**

A microcontroller coupled to a dual-port RAM via a microcontroller address bus. A peripheral device is coupled to the dual-port RAM via a peripheral address bus. An address comparator compares the microcontroller address bus and the peripheral address bus so as to produce a collision error signal that interrupts the microcontroller. A logic function element is coupled between the microcontroller and the dual-port RAM. The error signal is based at least in part on a comparison of a first address on the microcontroller address bus and a second address on the peripheral address bus, and a determination of whether the microcontroller and the peripheral device are simultaneously accessing (e.g. writing to) the dual-port RAM. Thus, the peripheral is allowed access (e.g. writing), while the simultaneous access by the microprocessor is inhibited and the microprocessor is notified of the inhibit via the collision error signal.

## Description

This invention relates generally to memory storage architectures and more particularly to collision detection for dual-port RAM operations.

Dual-port memory is used to implement a shared storage space between two sources of data such as, for example, a microcontroller and a data-sourcing peripheral device. Since readback of data from the dual-port memory does not change its contents, simultaneous read access does not pose the problem that simultaneous write access does. More specifically, because data can be transferred into the memory at any time and to any address, a simultaneous write operation to the same address could change the contents to an indeterminate value. This occurrence is known as a "write collision."

The problem of write collision has been addressed by defining constraints to prevent the collision from occurring such as, for example, by defining double buffering schemes or time multiplexing by means of bus arbitration. This arbitration is usually in the form of a write-request and grant protocol which holds off the slave process until the master has relinquished access to the address and returned a grant to the slave process. In such a bus mastering scheme, shared access is time-scheduled and an error indication is given when the master does not grant the bus in time for the slave to write data to it. Another common form of arbitration is time division of the write access so no two devices can write to any address simultaneously. This time-division arbitration design then dictates timing in a scheduled manner to prevent simultaneous writes.

These solutions to the problem of write collision introduce an unpredictable time delay for memory write accesses to any position in memory. Any time-scheduled arbitration involves a time penalty, as well as design complexity of the arbitration hardware. As such, there is currently a need for a memory storage architecture which eliminates or reduces these concerns.

Simultaneous write access is facilitated by allowing both a microcontroller and a peripheral device to access a dual-port RAM ("DPR") with read and write operations. If both the microcontroller and the peripheral device access the identical address on the DPR, the microcontroller access is disabled and the peripheral access continues. If the microcontroller is interrupted, it can take appropriate action such as counting the access operation as an error or retrying the access.

In an example embodiment of the invention, a microcontroller is coupled to a dual-port RAM via a microcontroller data bus and a microcontroller address bus. A peripheral device is coupled to the dual-port RAM via a peripheral data bus and a peripheral address bus. An address comparator has input ports, which are coupled to the microcontroller write signal, the microcontroller address bus, and the peripheral address bus. The address comparator has the ability to produce an interrupt signal on a control bus coupled to an interrupt port of the microcontroller. Interposed between the microcontroller and the dual-port RAM, is a logic function element. The logic function element can be implemented in, for example, circuitry or software. The output of the logic function element is coupled to the dual-port RAM. The interrupt signal is based at least in part on a comparison of a first address on the microcontroller address bus and a second address on the peripheral address bus, and upon whether the microcontroller and the peripheral device are simultaneously accessing the dual-port RAM.

Other aspects and advantages of the invention will become apparent from the following detailed description and accompanying drawing, illustrating by way of example the features of the invention.

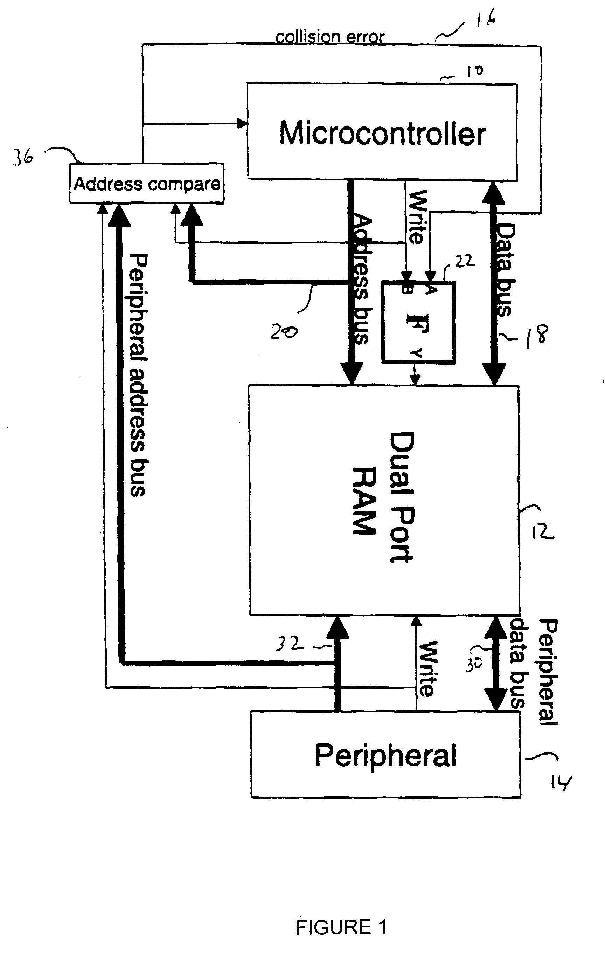

FIGURE 1 illustrates an example of a memory storage architecture in accordance with the principles of the invention.

As shown in FIGURE 1 for purposes of illustration, a microcontroller 10 and a peripheral device 14 share a common dual-port memory 12. A simultaneous access, such as a write operation, to the same address by both the microcontroller and the peripheral device generates a write collision error or interrupt signal that interrupts the microcontroller, but allows the peripheral device to proceed with the access operation.

The data flow for both the microcontroller 10 and the peripheral device 14 is into and out of a dual-port RAM ("DPR") 12. Each of the microcontroller 10 and the peripheral device 14 has an address bus and a data bus to enable random access from both sides of the DPR 12. The microcontroller 10 has a built-in interrupt capability. If a simultaneous access (e.g., write) operation by both the microcontroller 10 and the peripheral device 14 to the same address is initiated, the microcontroller is interrupted via an interrupt signal on a line 16, such that only the peripheral device is allowed to access the address in the DPR 12. The microcontroller 10 can then take appropriate action.

According to the example embodiment illustrated in FIGURE 1, the microcontroller 10 is connected to a first data port of the DPR 12 via a microcontroller data bus 18 and a microcontroller address bus 20. The microcontroller 10 accesses DPR 12 on the microcontroller data bus 18. A logic function element 22 is interposed between the microcontroller 10 and the DPR 12. An output of the logic function element 22 is connected to a first data port of the DPR 12.

The peripheral device 14 is connected to a second data port of the DPR 12 via a peripheral data bus 30 and a peripheral address bus 32. The peripheral device 14 accesses the DPR 12 via the peripheral data bus 30.

An address comparator 36 has four input ports. The four input ports of the address comparator 36 are coupled to microcontroller write signal, the microcontroller address bus 20, the peripheral write signal, and the peripheral address bus 32. The address comparator 36 produces a collision error signal on line 16. The collision error signal is produced based on (a) a comparison of a first address on the microcontroller address bus 20 and a second address on the peripheral address bus 32, and (b) a determination of whether the microcontroller 10 and the peripheral device 14 are simultaneously accessing (e.g. writing to) the DPR 12.

For example, (a) the peripheral device 14 and the microcontroller 10 are not writing simultaneously, or (b) the address in the DPR to which the peripheral device is writing and the address in the DPR to which the microcontroller is writing are not the same, the address comparator 36 would not produce the collision error signal. If, however, the peripheral device 14 and the microcontroller 10 are writing simultaneously, and if the address in the DPR to which the peripheral device is writing and the address in the DPR to which the microcontroller is writing are the same, the address comparator 36 would produce the collision error signal. In this example, the collision error signal indicates a write collision.

In the specific embodiment illustrated in FIGURE 1, the write collision interrupt signal produced by the address comparator 36 is applied to an interrupt port of the microcontroller 10 by way of the control line 16. The collision signal is also connected to an input of the logic function element.

The collision error signal output by the address comparator 36 is ordinarily in a logical false state (e.g., representing a "0"). When the interrupt signal in its false state is input to the logic function element 22, the output of the logic function element 22 is: (a) in a logical true state (e.g., representing a "1") when the data output from the microcontroller 10 on the microcontroller data bus 18 is a true or (b) in a logical false state (e.g., representing a "0") when the data output from the microcontroller 10 on the microcontroller data bus 18 is in a false state. As an example, the logic function element can implement the logic function depicted in the following table. It will be recognized by those skilled in the art that the logic operation represented by the table can be implemented in various ways, including a hardware or a software logic AND operation.

| A | B | Y |
|---|---|---|
| 0 | 0 | 0 |
| 0 | 1 | 1 |
| 1 | 0 | 0 |
| 1 | 1 | 0 |

Thus, when the error collision signal is a logical false state the output of the logic function element 22 follows the input B to the logic function element 22.

The microcontroller 10 receives the collision error signal at its interrupt port from the line 16. The microcontroller 10 determines, based on the collision error signal, whether to enable or disable the data output from the microcontroller. When the collision error signal, which is ordinarily in a logic false state, becomes a logic true state, the write signal from the microcontroller 10 to the DPR 12, is effectively disabled. Consequently, the microcontroller write operation is interrupted and inhibited while the write operation of the peripheral device 14 proceeds.

In applications where access time to the DPR 12 needs to be predictable, the present invention guarantees access to the DPR 12 for the peripheral device 14. An attempted simultaneous access operation (e.g. a write operation) by both the microcontroller 10 and the peripheral device 14 constitutes an error and is prevented as described with respect to the above exemplary embodiment. The peripheral device 14 has priority in writing to the DPR 12 and the microcontroller 10 is interrupted in advance of an error occurring. Depending upon the particular application of the invention, the microcontroller 10 may have priority rather than the peripheral device 14. In which case the relative positions of the microcontroller 10 and the peripheral devices 14 shown in the Figure would be reversed, and the collision error signal would be applied to the peripheral device 14. In addition, the DPR 12 is not limited to a memory device and may be any suitable dual port device.
While a particular form of the invention has been illustrated and described, it will also be apparent that various modifications can be made without departing from the spirit and scope of the invention.

## Claims

1. An apparatus, comprising:
a dual-port device;
first device including an interrupt input, first data bus and a first address bus, operatively coupled to the dual-port device;
a second device including a second data bus and a second address bus, operatively coupled to the dual-port device; and
an address comparator operatively coupled to the first address bus and the second address bus, so as to produce a collision error signaling in accordance with predetermined simultaneous accesses of the dual-port device by the first and second devices.

2. The apparatus of claim 1, further comprising:
a logic function element operatively coupled between the first device and the second device so as to inhibit the first device from accessing the dual-port device responsive to the collision error signal.

3. The apparatus of claim 2, wherein the first device produces an access signal and the logic function element includes at least a logical AND of the collision error signal and the access signal.

4. The apparatus of claim 3, wherein the access signal comprises a write signal provided by the first device.

5. The apparatus of claim 4, wherein the first device comprises a microcontroller and the second device comprises a peripheral device.

6. The apparatus of claim 4, wherein the first device comprises a peripheral and the second device comprises a microcontroller.

7. The apparatus of claim 1, wherein the predetermined simultaneous access comprises simultaneous writes to the dual-port device by the first and second devices.

8. The apparatus of claim 7, wherein the address comparator produces the collision error signal responsive to a comparison of the first and second address busses.

9. A method of controlling access to a dual-port device by first and second devices, comprising:
initiating access to a first address of the dual-port device by the first device;
initiating access to a second address of the in the dual-port device by the second device; and
inhibiting access by the first device based at least in part on a comparison of the first address and the second address.

10. The method of claim 9, further comprising producing a collision error signal in accordance with predetermined simultaneous accesses of the dual-port device by the first and second devices.

11. The method of claim 10, further comprising inhibiting the access by the first device responsive to the collision error signal.

12. The method of claim 10, wherein the first device produces an access signal and the method further comprises controllably passing the access signal to the dual-port device responsive to the collision error signal.

13. The method of claim 12, wherein the access comprises a write operation to the dual-port device.

14. The method of claim 11, wherein the first device produces an access signal and where the inhibiting access by the first device includes:
performing a logical AND using the collision error signal and the access signal.
